# EUROPEAN PATENT APPLICATION

(11) **EP 4 187 808 A1**
(43) Date of publication of application: **31.05.2023**
(21) Application number: 20946319.9
(22) Date of filing: 22.07.2020
(51) Int. Cl.: H04B 7/08, H04B 7/06

(54) **TERMINAL, WIRELESS COMMUNICATION METHOD, AND BASE STATION**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); SUN, Weiqi, Beijing 100190 (CN)
(74) Representative: Hoffmann Eitle
(86) International application number: PCT/JP2020/028383
(87) International publication number: WO 2022/018843

(57) **Abstract**

A terminal according to an aspect of the present disclosure includes: a receiving section that receives one or more beam failure detection reference signals (BFD-RSs) corresponding to each of a plurality of panels; and a control section that determines a new BFD-RS from a candidate BFD-RS set in a case where radio link quality of at least some of configured BFD-RSs is lower than a specific threshold. According to one aspect of the present disclosure, beam failure detection or beam failure recovery can be appropriately performed even when a plurality of transmission points are used.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). In addition, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

In existing LTE systems (LTE Rel. 8 to 15), radio link quality is monitored (radio link monitoring (RLM)). When a radio link failure (RLF) is detected by RLM, re-establishment of radio resource control (RRC) connection is requested of the user terminal (user equipment: UE).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

For future radio communication systems (for example, New Radio), implementation of a procedure for detecting a beam failure and switching to another beam (which may also be referred to as a beam failure recovery (BFR) procedure, BFR, or the like) is under study.

In Rel. 15 NR, BFR is triggered when all the qualities of the reference signal for beam failure detection fall below a predetermined threshold. On the other hand, when the quality of a part of the reference signal for beam failure detection becomes less than a predetermined threshold, it is determined to be partial beam failure and it is considered that beam failure recovery is performed.

Further, in Rel. 17 NR and beyond, it is also assumed that communication is performed using a plurality of user terminal (UE) panels/a plurality of transmission/reception points (TRPs). In this case, it is conceivable to perform beam failure detection for a plurality of UE panels/a plurality of TRPs, but how to control beam failure detection or beam failure recovery for each UE panel/TRP becomes a problem. If beam failure detection or beam failure recovery for each UE panel/TRP cannot be properly controlled, communication throughput may decrease or communication quality may deteriorate.

The present disclosure has been made in view of such a point, and an object of the present disclosure is to provide a terminal, a radio communication method, and a base station which enable appropriate beam failure detection or beam failure recovery even when a plurality of transmission points are used.

### Solution to Problem

A terminal according to an aspect of the present disclosure includes: a receiving section that receives one or more beam failure detection reference signals (BFD-RSs) corresponding to each of a plurality of panels; and a control section that determines a new BFD-RS from a candidate BFD-RS set in a case where radio link quality of at least some of configured BFD-RSs is lower than a specific threshold.

### Advantageous Effects of Invention

According to one aspect of the present disclosure, beam failure detection or beam failure recovery can be appropriately performed even when a plurality of transmission points are used.

### Brief Description of Drawings

Fig. 1 is a diagram illustrating an example of a beam recovery procedure in Rel. 15 NR.
Fig. 2 is a diagram illustrating an example of a partial beam failure.
Figs. 3A and 3B are diagrams illustrating an example of configuring beam failure detection reference signal (BFD RS) sets corresponding to a plurality of transmission/reception points (TRPs)/panels for a user equipment (UE).
Fig. 4 is a diagram illustrating an example of a medium access control control element (MAC CE) operation based on the partial beam failure by the UE and a base station.
Figs. 5A and 5B are diagrams illustrating a beam failure recovery (BFR) MAC CE configuration before Rel. 16.
Figs. 6A and 6B are diagrams illustrating an example of a BFR MAC CE configuration including a panel ID.
Figs. 7A and 7B are diagrams illustrating another example of the BFR MAC CE configuration including the panel ID.
Figs. 8A and 8B are diagrams illustrating another example of the BFR MAC CE configuration including the panel ID.
Fig. 9 is a diagram illustrating an example of a second BFR MAC CE configuration.
Fig. 10 is a diagram illustrating an example of Configuration 2-1 of an extended BFR MAC CE.
Fig. 11 is a diagram illustrating an example of Configuration 2-2 of the extended BFR MAC CE.
Fig. 12 is a diagram illustrating an example of Configuration 2-3 of a BFR MAC CE.
Fig. 13 is a diagram illustrating another example of Configuration 2-3 of the BFR MAC CE.
Fig. 14 is a diagram illustrating another example of Configuration 2-3 of the extended BFR MAC CE.
Fig. 15 is a diagram illustrating another example of Configuration 2-3 of the extended BFR MAC CE.
Fig. 16 is a diagram illustrating an example of a schematic configuration of a radio communication system according to one embodiment.
Fig. 17 is a diagram illustrating an example of a configuration of a base station according to one embodiment.
Fig. 18 is a diagram illustrating an example of a configuration of a user terminal according to one embodiment.
Fig. 19 is a diagram illustrating an example of a hardware configuration of the base station and the user terminal according to one embodiment.

### Description of Embodiments

### (Beam Failure Detection)

In NR, communication is performed using beam forming. For example, a user equipment (UE) and a base station (for example, gNodeB (gNB)) may use a beam used for signal transmission (which is also referred to as a transmission beam, a Tx beam, or the like) or a beam used for signal reception (which is also referred to as a reception beam, an Rx beam, or the like).

In a case where beam forming is used, degradation of radio link quality is assumed because it becomes susceptible to interference by an obstacle. A radio link failure (RLF) may frequently occur due to degradation of the radio link quality. When the RLF occurs, cell reconnection is required, and thus frequent occurrence of the RLF leads to degradation of system throughput.

In the NR, to suppress the occurrence of the RLF, a procedure of switching to another beam (which may also be referred to as beam recovery (BR), beam failure recovery (BFR), Layer 1/Layer 2 (L1/L2) beam recovery, or the like) is performed in a case where quality of a specific beam is degraded. The BFR procedure may be simply referred to as BFR.

Note that a beam failure (BF) in the present disclosure may also be referred to as a link failure.

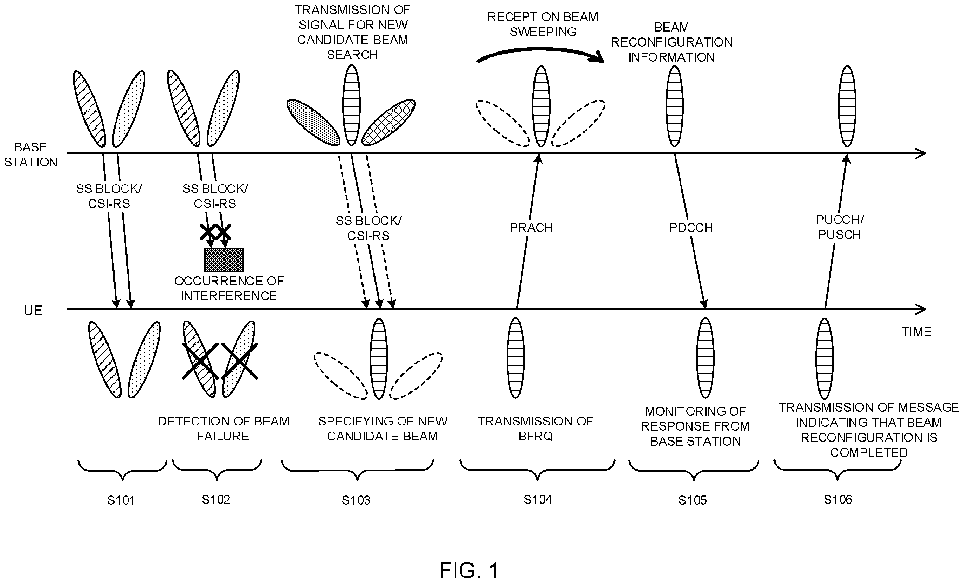

Fig. 1 is a diagram illustrating an example of a beam recovery procedure in Rel. 15 NR. The number of beams, or the like, is an example, and is not limited thereto. In an initial state (Step S101) in Fig. 1, the UE performs measurement based on a reference signal (RS) resource transmitted using two beams.

The RS may be at least one of a synchronization signal block (SSB) or a channel state information RS (CSI-RS). Note that an SSB may also be referred to as an SS/physical broadcast channel (PBCH) block, or the like.

The RS may be at least one of a primary synchronization signal (primary SS (PSS)), a secondary synchronization signal (secondary SS (SSS)), a mobility reference signal (mobility RS (MRS)), a signal included in an SSB, the SSB, a CSI-RS, a demodulation reference signal (DMRS), a beam-specific signal, or the like, or a signal configured by extending or changing these. The RS measured in Step S101 may be referred to as an RS for beam failure detection (beam failure detection RS (BFD-RS)), or the like.

In Step S102, interference in radio waves from the base station occurs, whereby the UE cannot detect the BFD-RS (or reception quality of the RS is degraded). Such interference may occur due to, for example, an effect of an obstacle between the UE and the base station, fading, interference, or the like.

Once a predetermined condition is satisfied, the UE detects a beam failure. For example, the UE may detect occurrence of a beam failure in a case where a block error rate (BLER) is less than a threshold for all of configured BFD-RSs (BFD-RS resource configurations). When the occurrence of the beam failure is detected, a lower layer (physical (PHY) layer) of the UE may notify (instruct) a higher layer (MAC layer) of a beam failure instance.

Note that a criterion for determination is not limited to the BLER, and may be reference signal received power in a physical layer (Layer 1 reference signal received power (L1-RSRP)). Further, instead of RS measurement or in addition to RS measurement, beam failure detection may be performed based on a downlink control channel (physical downlink control channel (PDCCH)) or the like. The BFD-RS may be expected to be in a quasi-co-location (QCL) with a DMRS of the PDCCH monitored by the UE.

Here, the QCL is an indicator indicating a statistical property of a channel. For example, a case where a certain signal/channel and another signal/channel have a QCL relationship may mean that it is possible to assume that at least one of a doppler shift, a doppler spread, an average delay, a delay spread, or a spatial parameter (for example, a spatial Rx parameter) is identical (having a QCL relationship with at least one of these) between a plurality of these signals/channels.

Note that, the spatial Rx parameter may correspond to a reception beam of the UE (for example, a reception analog beam), and the beam may be specified on the basis of spatial QCL. The QCL (or at least one element of QCL) in the present disclosure may be replaced with the spatial QCL (sQCL).

Information regarding the BFD-RS (for example, an RS index, resource, number, number of ports, precoding, or the like), information regarding beam failure detection (BFD) (for example, the above-described threshold value), or the like may be configured in (reported to) the UE by using higher layer signaling, or the like. The information regarding the BFD-RS may also be referred to as information regarding a resource for BFR, or the like.

In the present disclosure, higher layer signaling may be, for example, any of radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The MAC layer of the UE may start a predetermined timer (which may also be referred to as a beam failure detection timer) in a case where a beam failure instance notification is received from the PHY layer of the UE. The MAC layer of the UE may trigger BFR (for example, start any one of random access procedures to be described later) after receiving the beam failure instance notification a certain number of times (for example, beamFailureInstanceMaxCount configured by RRC) or more before the timer expires.

The base station may determine that the UE has detected a beam failure in a case where there is no notification from the UE or when a predetermined signal (a beam failure recovery request in Step S104) is received from the UE.

In Step S103, for beam recovery, UE starts a search for a new candidate beam to be newly used for communication. The UE may measure a predetermined RS to select a new candidate beam corresponding to the RS. The RS measured in Step S103 may be referred to as, for example, a new candidate beam identification RS (NCBI-RS), CBI-RS, and a candidate beam RS (CB-RS). The NCBI-RS may be the same as or different from the BFD-RS. Note that a new candidate beam may also be referred to as a candidate beam.

The UE may determine a beam corresponding to an RS that satisfies a predetermined condition as a new candidate beam. The UE may determine a new candidate beam based on, for example, an RS whose L1-RSRP exceeds a threshold among configured NCBI-RSs. A criterion is not limited to the L1-RSRP. The L1-RSRP related to an SSB may also be referred to as SS-RSRP. The L1-RSRP related to a CSI-RS may also be referred to as CSI-RSRP.

Information regarding an NCBI-RS (for example, an RS resource, number, number of ports, precoding, or the like), information regarding new candidate beam identification (NCBI) (for example, the above-described threshold), or the like may be configured in (reported to) the UE using higher layer signaling, or the like. Information regarding the NCBI-RS may be acquired based on information regarding the BFD-RS. Information regarding the NCBI-RS may also be referred to as information regarding an NBCI resource or the like.

Note that the BFD-RS, NCBI-RS, or the like may be replaced with a radio link monitoring reference signal (RLM-RS).

In Step S104, the UE that has specified the new candidate beam transmits a beam failure recovery request (BFRQ). The beam failure recovery request may also be referred to as a beam recovery request signal, a beam failure recovery request signal, or the like.

The BFRQ may be transmitted using, for example, at least one of a physical uplink control channel (PUCCH), a physical random access channel (PRACH), a physical uplink shared channel (PUSCH), or a configured grant (CG) PUSCH.

The BFRQ may include information on the new candidate beam specified in Step S103. The resource for the BFRQ may be associated with the new candidate beam. Notification of the information on the beam may be performed using, for example, a beam index (BI), a port index of a predetermined reference signal, a resource index (for example, CSI-RS resource indicator (CRI), SSB resource indicator (SSBRI)), or the like.

In the Rel. 15 NR, contention-based BFR (CB-BFR) that is BFR based on a contention-based random access (RA) procedure and contention-free BFR (CF-BFR) that is BFR based on a non-contention based random access procedure have been studied. In the CB-BFR or the CF-BFR, the UE may transmit a preamble (which is also referred to as an RA preamble, a physical random access channel (PRACH), an RACH preamble, or the like) as the BFRQ by using a PRACH resource.

In the CB-BFR, the UE may transmit a preamble randomly selected from one or more preambles. Meanwhile, in the CF-BFR, the UE may transmit a preamble uniquely allocated to the UE from the base station. In the CB-BFR, the base station may allocate an identical preamble to a plurality of UEs. In the CF-BFR, the base station may allocate preambles individually to the UEs.

Note that the CB-BFR and the CF-BFR may also be referred to as CB PRACH-based BFR (contention-based PRACH-based BFR (CBRA-BFR)) and CF PRACH-based BFR (contention-free PRACH-based BFR (CFRA-BFR)), respectively. The CBRA-BFR may also be referred to as CBRA for BFR. The CFRA-BFR may also be referred to as CFRA for BFR.

In either the CB-BFR or the CF-BFR, the information regarding the PRACH resource (RA preamble) may be reported by, for example, higher layer signaling (RRC signaling and the like). For example, the information may include information indicating a correspondence relationship between the detected DL-RS (beam) and the PRACH resource, and different PRACH resources may be associated with each DL-RS.

In Step S105, the base station that has detected the BFRQ transmits a response signal (which may also be referred to as a gNB response or the like) for the BFRQ from the UE. The response signal may include reconfiguration information (for example, DL-RS resource configuration information) for one or a plurality of beams.

The response signal may be transmitted, for example, in a UE common search space of a PDCCH. The response signal may be reported using a PDCCH (DCI) scrambled in cyclic redundancy check (CRC) by an identifier of the UE (for example, cell-radio RNTI (C-RNTI)). The UE may determine at least one of a transmission beam or a reception beam to be used, based on beam reconfiguration information.

The UE may monitor the response signal based on at least one of a control resource set (CORESET) for BFR or a search space set for BFR.

For the CB-BFR, contention resolution may be determined to be successful in a case where the UE receives a PDCCH corresponding to the C-RNTI regarding the UE itself.

Regarding the processing of Step S105, a period for the UE to monitor a response from the base station (for example, gNB) to the BFRQ may be configured. The period may be referred to as, for example, a gNB response window, a gNB window, and a beam recovery request response window. The UE may retransmit the BFRQ if there is no gNB response detected within the window period.

In Step S106, the UE may transmit a message indicating that beam reconfiguration is completed to the base station. The message may be transmitted by the PUCCH or PUSCH, for example.

The beam recovery success (BR success) may represent a case where the processing reaches Step S106, for example. Meanwhile, the beam recovery failure (BR failure) may correspond to, for example, that the BFRQ transmission has reached a predetermined number of times or that the beam failure recovery timer (Beam-failure-recovery-Timer) has expired.

Note that the numbers of these steps are merely numbers for description, and a plurality of steps may be combined or the order may be changed. Further, whether or not to implement BFR may be configured in the UE by using higher layer signaling.

### (Beam Management)

In Rel. 15 NR, a beam management (BM) method has been studied. In the beam management, it has been studied to perform beam selection based on the L1-RSRP reported by the UE. Changing (switching) a beam of a signal/channel may be equivalent to changing at least one of a transmission configuration indication (or transmission configuration indicator (TCI)) state or a QCL assumption of the signal/channel.

The UE may report (transmit) a measurement result for beam management using a physical uplink control channel (PUCCH) or a physical uplink shared channel (PUSCH). The measurement result may be, for example, CSI including at least one of the L1-RSRP, L1-reference signal received quality (RSRQ), L1-signal to interference plus noise ratio (SINR), L1-signal to noise ratio (SNR), or the like.

A measurement result (for example, CSI) reported for beam management may be referred to as a beam measurement, a beam measurement report, a beam report, a beam report CSI, or the like.

The CSI measurement for the beam report may include interference measurement. The UE may measure channel quality, interference, and the like using a resource for CSI measurement, and derive the beam report.

The beam report may include a result of at least one of channel quality measurement and interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

The CSI report configuration information may include a "report quantity" (which may be represented by an RRC parameter "reportQuantity") that is information of a parameter to be reported in one report instance (for example, one CSI). The report quantity is defined by the type of the ASN.1 object "choice". Therefore, one of the parameters (cri-RSRP, ssb-Index-RSRP, and the like) defined as the report quantity is set.

The UE in which the higher layer parameter (for example, the RRC parameter "groupBasedBeamReporting" for group-based beam reporting) included in the CSI report configuration information is disabled may include, for each report setting, beam measurement resource IDs (for example, SSBRI, CRI) having different numbers of higher layer parameters (for example, the RRC parameter "nrofReportedRS" indicating the number of reported RSs) included in the CSI report configuration information and measurement results (for example, L1-RSRP) corresponding to the respective IDs in the beam report (one report instance).

The UE in which groupBasedBeamReporting is enabled may include, for each report setting, two different beam measurement resource IDs and two measurement results (for example, L1-RSRP) corresponding to the respective IDs in the beam report. In other words, the UE with groupBasedBeamReporting enabled divides the DL-RS (for example, CSI-RS) into two groups and reports the ID and the measurement value for the higher RS in each group. Note that the two beam measurement resources (CSI-RS resource, SSB resource) may be simultaneously received by the UE by using one spatial domain reception filter or may be simultaneously received by the UE by using a plurality of simultaneous spatial domain reception filters.

In Rel. 15 NR, cri-RSRP and ssb-Index-RSRP of the report quantities are related to beam management. The UE in which the cri-RSRP is configured as the report quantity reports the CRI and the L1-RSRP corresponding to the CRI. The UE in which the ssb-Index-RSRP is configured as the report quantity reports the SSBRI and the L1-RSRP corresponding to the CRI.

The CSI report can include one or more sets of CRI/SSBRI and RSRP. The number of these sets may be set by a higher layer parameter (for example, the RRC parameter "nrofReportedRS") indicating the number of reference signal resources to be reported.

For L1-RSRP reporting, when nrofReportedRS is configured to be 1 (the value is 'n1'), RSRP #1, which is a field of a predetermined number of bits (for example, m bits) indicating the L1-RSRP of the largest measurement value, is included in the CSI report. In Rel. 15 NR, m = 7.

For L1-RSRP reporting, when nrofReportedRS is configured to be larger than 1, or groupBasedBeamReporting is enabled, the UE uses differential L1-RSRP-based reporting. Specifically, the UE includes, in the same CSI report (reporting instance), RSRP #1 indicating the L1-RSRP having the largest measurement value and a differential RSRP #k calculated (for example, as a difference from the measurement value,) with reference to the largest measurement value for the L1-RSRP having the k-th largest (for example, k = 2, 3, and 4) measurement value. Here, the differential RSRP #k may be a field of bits with the number (for example, n bits) smaller than the predetermined number. In Rel. 15 NR, n = 4.

Note that when groupBasedBeamReporting is enabled, the UE includes RSRP #1 and differential RSRP #2 in the same CSI report.

Note that in NR Rel. 16 and beyond, nrofReportedRS may be a value of 4 or more, or may be 4 or more. The CSI report may include four or more sets of CRI/SSBRI and RSRP.

Incidentally, beam management-related extensions (for example, beam reports suitable for a plurality of TRPs) for a UE having a plurality of panels (multiple panels), a plurality of transmission/reception points (multiple transmission/reception points (TRP)), and the like have been studied for a future radio communication system (for example, Rel. 17 NR).

Since groupBasedBeamReporting described above can be reported in one report for two groups, it is suitable when multi-TRP transmission, multi-panel reception, or the like is applied. For example, the best beam of a certain TRP as RSRP #1 and the best beam of another TRP as differential RSRP #2 can be used for reporting.

In NR Rel. 16, introduction of L1-SINR reporting is studied. With respect to the calculation of the L1-SINR, the UE may configure at least one of the NZP CSI-RS resource or the SSB resource for channel measurement and configure at least one of the NZP CSI-RS resource or the CSI-IM resource for interference measurement.

The UE in which the cri-SINR is set as the report quantity reports the CRI and the L1-SINR corresponding to the CRI. The UE in which the ssb-Index-SINR is set as the report quantity reports the SSBRI and the L1-SINR corresponding to the CRI.

The UE in which the higher layer parameter (for example, the RRC parameter "groupBasedBeamReporting" for group-based beam reporting) included in the CSI report configuration information is disabled may include, for each report setting, beam measurement resource IDs (for example, SSBRI and CRI) having different numbers of higher layer parameters (for example, the RRC parameter "nrofReportedRSForSINR" indicating the number of RSs reported for the SINR) included in the CSI report configuration information and measurement results (for example, L1-SINR) corresponding to the respective IDs in the beam report (one or more report instances).

The UE in which groupBasedBeamReporting is enabled may include, for each report setting, two different beam measurement resource IDs and two measurement results (for example, L1-SINR) corresponding to the respective IDs in the beam report. Note that the two beam measurement resources (CSI-RS resource, SSB resource) may be simultaneously received by the UE by using one spatial domain reception filter or may be simultaneously received by the UE by using a plurality of simultaneous spatial domain reception filters.

Note that groupBasedBeamReporting for SINR reporting may be replaced with a parameter such as "groupBasedBeamReportingForSINR".

For the L1-SINR reporting, when nrofReportedRSForSINR is configured to be 1 (a value is 'n1'), SINR #1, which is a 7-bit field indicating the L1-SINR of the largest measurement value, is included in the CSI report.

For the L1-SINR reporting, when the nrofReportedRSForSINR is configured to be larger than 1, the UE uses differential L1-SINR-based reporting. Specifically, the UE includes SINR #1 indicating the L1-SINR of the largest measurement value and the differential SINR #k calculated (for example, as a difference from the measurement value) with reference to the largest measurement value for the k-th (k = 2, 3, and 4) large L1-SINR in the same CSI report (reporting instance). Here, the differential SINR #k may be a 4-bit field.

Note that SINR #1 may correspond to a value quantized to 7 bits with a step size of 0.5 dB in a range of -23 dB or more and 40 dB or less. The differential SINR #k may correspond to a value quantized to 4 bits with a step size of 1 dB. Note that the range, step size, and the like of each value are not limited thereto.

### (Partial Beam Failure)

In Rel. 17 NR and beyond, it is considered to introduce partial beam failure detection in which a beam failure when the quality of some BFD-RSs is degraded.

When the quality of some of the BFD-RSs is degraded, the UE may indicate a beam failure from the lower layer (PHY layer) to the higher layer (MAC layer).

A beam failure detected by some but not all BFD-RSs may be referred to as a partial beam failure (PBF). Beam failure recovery performed based on the PBF may be referred to as partial beam failure recovery (PBFR).

A BFRQ triggered based on the PBF may be transmitted using a PUCCH or a PUSCH via a UL beam/UL link that is available or alive (not disconnected).

The UE may perform PDCCH monitoring according to configuration of the previous TCI state until receiving at least one of reconfiguration of the TCI state or activation of the TCI state.

Here, the TCI state will be briefly described. The TCI state may indicate (or include) QCL information. The TCI state (and/or QCL information) can be, in one example, information regarding QCL between a target channel (or reference signal (RS) for the channel) and another signal (for example, another downlink reference signal (DL-RS)). In addition, the TCI state can include, in one example, at least one of information regarding a DL-RS having a QCL relationship (DL-RS information) and information that indicates the type of the above-described QCL (QCL type information).

The DL-RS information may include at least one of information indicating a DL-RS in a QCL relationship and information indicating a resource of the DL-RS. In one example, in the case where a plurality of reference signal sets (RS sets) is configured in the UE, the DL-RS information can indicate at least one of DL-RS having a QCL relationship with a channel (or a port for the channel) among RSs included in the RS set, a resource for the DL-RS, or the like.

Information regarding QCL with a PDCCH (or a DMRS antenna port associated with the PDCCH) and a predetermined DL-RS may be referred to as a TCI state or the like for the PDCCH. The UE can determine the TCI state for a PDCCH (CORESET) based on RRC signaling and a MAC CE.

In one example, for the UE, one or more (K) TCI states can be configured for each CORESET via higher layer signaling. The UE may activate one or more of configured TCI-states for each CORESET by using a MAC CE. The UE may monitor (reception processing) a CORESET based on the activated TCI state.

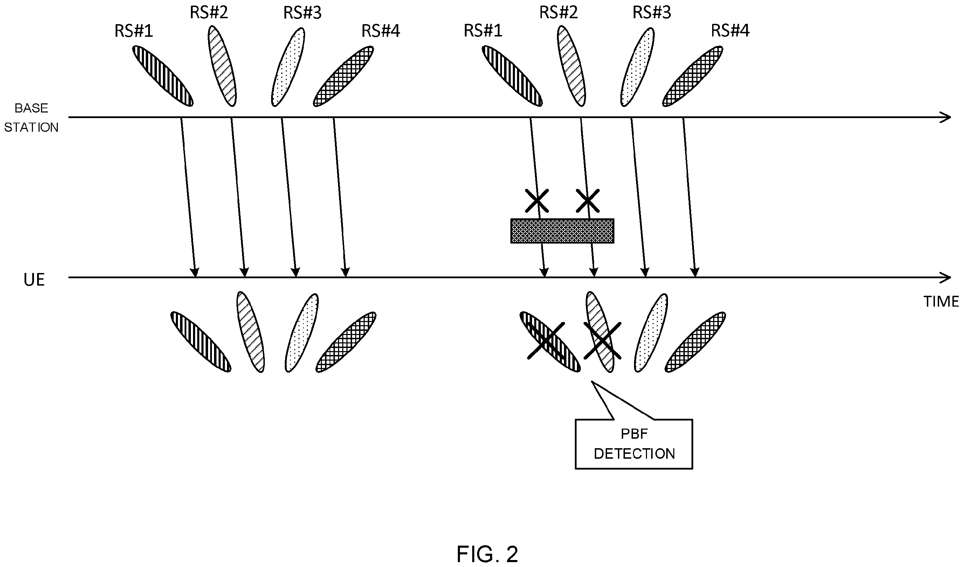

Fig. 2 is a diagram illustrating an example of the partial beam failure detection. In the example of Fig. 2, the UE and the base station perform communication by using a plurality of beams (here, four beams). The plurality of beams correspond to different RSs (RS #1 to RS #4), respectively. In the example illustrated in Fig. 2, the partial beam failure is detected in a case where the quality of some RSs (here, RS #1 and RS #2) among a plurality of RSs is lower than a specific threshold.

By the way, as described above, in Rel. 15 and 16 NR, beam recovery is triggered when the quality of all BFD-RSs falls below a specific threshold (all beams have failure). When all beams have failure, it is assumed that there is no UL beam (UL link) available for the UE, and therefore the BFR under consideration so far uses a PRACH/PUCCH to transmit the BFRQ.

Further, in Rel. 17 NR and beyond, it is also assumed that communication is performed using a plurality of transmission/reception points (TRP)/a plurality of UE panels. In this case, it is conceivable to perform partial beam failure detection for a plurality of TRPs/panels, but how to control the partial beam failure detection for each TRP or the beam failure recovery based on the partial beam failure detection is a problem.

Specifically, in a case where the UE receives a plurality of (for example, two) PDSCHs/DMRSs/CSI-RSs/SSBs with different specific QCL (for example, QCL type D), the NW needs to recognize that the power/quality of a received signal falls below a threshold in any of the plurality of UE panels.

Therefore, the present inventors have conceived of a method of appropriately controlling partial beam failure detection or beam failure recovery based on the partial beam failure detection when one or more TRPs/panels are used.

Hereinafter, embodiments according to the present disclosure will be described in detail with reference to the drawings. The respective aspects may be applied individually or in combination.

### (Radio Communication Method)

In the present disclosure, the UE may be a UE that performs transmission and reception with a TRP using a plurality of panels. Each panel may correspond to a different TRP, one panel may correspond to a plurality of TRPs, or a plurality of panels may correspond to one TRP.

In the present disclosure, a UE panel (or panel index) may correspond to a specific group. In this case, the UE may assume that a beam/RS of each group is measured in each UE panel. The UE may assume that beams of a plurality of groups are simultaneously received (using different panels).

Furthermore, in the present disclosure, a TRP (or base station) panel (or panel index) may correspond to a specific group. In this case, the UE may assume that a beam/RS of each group is transmitted from each TRP (or base station) panel. The UE may assume that beams of a plurality of groups can be simultaneously received or cannot be simultaneously received.

In the present disclosure, the TRP (or base station) may be replaced with a TRP (or base station) panel, an RS group, an antenna port group, a spatial relation group, a QCL group, a TCI state group, a CORESET group, or the like.

In the present disclosure, in a case where single DCI is applied, an n-th TRP (n is an arbitrary integer (for example, 1 or 2)) may correspond to an n-th TCI state and an n-th code division multiplexing (CDM) group.

In the present disclosure, when multiple pieces of DCI are applied, a first TRP may correspond to a CORESET without CORESETPoolIndex or a CORESET with CORESETPoolIndex = 0. A second TRP may correspond to a CORESET with CORESETPoolIndex = 1.

Here, the UE panel may be replaced with an RS group, an antenna port group, a spatial relation group, a QCL group, a TCI state group, a CORESET group, or the like.

In the present disclosure, a panel may be associated with a group index of an SSB/CSI-RS group. Further, in the present disclosure, a panel may be associated with a TRP. In the present disclosure, a plurality of panels may be associated with a group index of group beam-based reporting. In the present disclosure, a panel may be associated with a group index of an SSB/CSI-RS group for group based-beam reporting.

In the present disclosure, a panel may mean a plurality of TRPs, a TRP panel, and a UE panel.

In the present disclosure, a BFD RS for which a beam failure is detected, a failed BFD RS, a TRP for which a beam failure is detected, a failed TRP, a UE panel for which a beam failure is detected, and a failed UE panel may be replaced with each other.

In the present disclosure, A/B may indicate at least one of A or B. In the present disclosure, A/B/C may indicate at least one of A, B, or C.

### <First Embodiment>

In a first embodiment, a configuration of a BFD RS set for a UE to perform BFD in communication with a plurality of TRPs will be described.

BFD RS sets corresponding to a plurality of TRPs/panels may be independently configured for the UE. Next, for the UE, a new beam RS set may be configured for each TRP/panel from the BFD RS sets. Next, the UE may transmit information regarding the new beam RS set (alternatively, a new beam RS) to the NW.

For example, N (for example, two) BFD RS sets corresponding to N TRPs/panels, respectively, may be configured for the UE. The UE may determine a new beam RS set for each TRP/panel from the BFD RS sets.

In addition, BFD RS sets corresponding to a plurality of TRPs/panels may be configured in common for the UE. At this time, the number of BFD RS sets configured in common may be one or more. Next, for the UE, a new beam RS set common to a plurality of TRPs/panels may be configured from the BFD RS sets. Next, the UE may transmit information regarding the new beam RS set (alternatively, a new beam RS) to the NW.

For example, the BFD RS sets corresponding to N TRPs/panels, respectively, may be configured in common for the UE. The UE may determine a new beam RS set common to each TRP/panel from the BFD RS sets.

At this time, association between an SSB/CSI-RS index and a TRP/panel index may be configured/reported for the UE as a BFR configuration (information regarding the BFR configuration). The BFR configuration may be configured/reported for the UE by higher layer signaling.

In addition, the association between the SSB/CSI-RS index and the TRP/panel index does not have to be configured/reported for the UE. In this case, the association may be configured/reported for the UE as information regarding a configuration of group-based beam reporting.

Even when one or more BFD RS sets corresponding to a plurality of TRPs/panels are configured in common for the UE, BFD RSs included in the sets may be configured for different TRPs/panels, respectively.

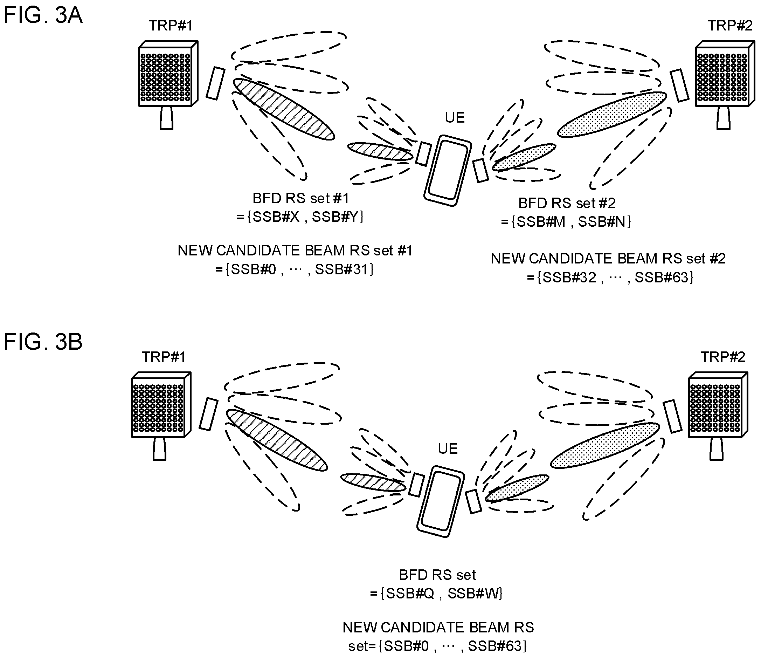

Figs. 3A and 3B are diagrams illustrating an example of configuring BFD RS sets corresponding to a plurality of TRPs/panels for the UE. In Fig. 3A, BFD RS sets corresponding to a plurality of (here, two) TRPs are configured for a certain UE. SSB #X and SSB #Y are configured as BFD RS set #1 for TRP #1. SSB #M and SSB #N are configured as BFD RS set #2 for TRP #2. In addition, SSB #0 to SSB #31 are configured as new candidate beam RS set #1 for TRP #1. SSB #32 to SSB #63 are configured as new candidate beam RS set #2 for TRP #2.

In Fig. 3A, in a case where a beam failure is detected for at least one of TRP #1 or TRP #2, the UE may determine a BFD RS to be newly used from a new candidate beam RS set corresponding to the TRP requiring beam recovery.

In Fig. 3B, a BFD RS set corresponding to a plurality of (here, two) TRPs is configured in common for a certain UE. SSB #Q and SSB #W are configured as a BFD RS set for TRP #1 and TRP #2. In addition, SSB #0 to SSB #63 are configured as a new candidate beam RS set for TRP #1 and TRP #2.

In Fig. 3B, in a case where a beam failure is detected for at least one of TRP #1 or TRP #2, the UE may determine a BFD RS to be newly used from a new candidate beam RS set corresponding to the TRP requiring beam recovery.

The number and arrangement of TRPs, the number and direction of panels (beams), the BFD RS sets, and the number of BFD RSs in the BFD RS sets in Figs. 3A and 3B are merely examples, and the present disclosure is not limited thereto.

As described above, according to the first embodiment, even when a UE (or a UE having a plurality of panels) performs communication with a plurality of TRPs, it is possible to appropriately perform beam failure detection.

### <Second Embodiment>

In a second embodiment, a UE operation related to beam failure recovery in a case where a beam failure (BF) for at least one TRP among a plurality of TRPs is detected will be described. The "case where a beam failure for at least one TRP among a plurality of TRPs is detected" may be replaced with a "case where a BF is detected in at least one BFD RS set".

When a BF for at least one TRP/panel among a plurality of TRPs/panels is detected, the UE may transmit a beam recovery request to another TRP (using another panel).

In a case where the NW (network) (for example, the base station) is not aware of information regarding the UE panel (Case 1), the NW may consider that different BFD RS sets correspond to different TRPs/panels. The UE may assume that the NW considers that the different BFD RS sets correspond to different TRPs/panels, and notify the NW of at least one of a failed BFD RS set or a new candidate beam corresponding to the set via an available link. In this case, association between the BFD RS set and the TRP may be configured/reported for the UE/NW.

In a case where the NW is aware of the information regarding the UE panel (for example, the panel index) (Case 2), the UE may be configured to perform transmission/reception using the UE panel, or may determine to perform transmission/reception using the UE panel and notify the NW of the information regarding the UE panel (for example, the UE panel index).

The information regarding the UE panel of which the UE notifies the NW may be transmitted as UE capability information (UE capability).

At this time, the UE may notify the NW of at least one of a failed BFD RS set or a new candidate beam corresponding to the set via an available link, as in a case where the NW is not aware of the information regarding the UE panel (for example, the panel index).

In addition, at this time, the UE may notify the NW of at least one of a failed UE panel (or a failed BFD RE set or a failed TRP) index, a new candidate beam of the failed UE panel, or a new candidate beam corresponding to the panel via an available link. In this case, association between the BFD RS set and the UE panel may be configured/reported for the UE/NW. Further, in this case, the association may be configured/reported for the UE as information regarding a configuration of group-based beam reporting.

As described above, according to the second embodiment, even when a beam failure for at least one TRP/panel among a plurality of TRPs/panels is detected, beam failure recovery can be appropriately performed.

### <Third Embodiment>

In a third embodiment, a method for controlling partial beam failure detection by using higher layer signaling (for example, a MAC CE) related to BFR, which is studied in NR Rel. 16, will be described.

In NR Rel. 16, when the quality of all BFD RSs configured in the UE is equal to or lower than a certain threshold, the BFR is performed using the MAC CE. On the other hand, in Rel. 17 NR and beyond, when the quality of all BFD RSs corresponding to a certain TRP/panel among the BFD RSs configured in the UE is equal to or lower than a certain threshold, the BFR may be performed using the MAC CE.

In the present disclosure, the MAC CE for performing the BFR may be referred to as a MAC CE for BFR or a BFR MAC CE. Furthermore, in the present disclosure, the BFR MAC CE may be simply referred to as a MAC CE.

In addition, in NR Rel. 16, it is considered that the UE determines a certain beam having the best quality (for example, maximum L1-RSRP) for each configured new beam RS. On the other hand, in Rel. 17 NR and beyond, after BFD, the UE may determine, for each TRP/panel, a certain beam having the best quality (for example, maximum L1-RSRP) for each new configured beam RS.

In addition, QCL for a signal/channel (for example, PDCCH, PUCCH, PDSCH, or PUSCH) may be updated according to new beam configuration. In other words, the UE may perform BFD assuming that the QCL for a signal/channel is updated according to new beam configuration. At this time, QCL corresponding to a TRP/panel other than a failed TRP/panel does not have to be updated.

Note that whether or not a report by the MAC CE explicitly includes information regarding the UE panel (for example, the panel ID) may depend on whether or not the case is Case 1 or Case 2 described in the second embodiment.

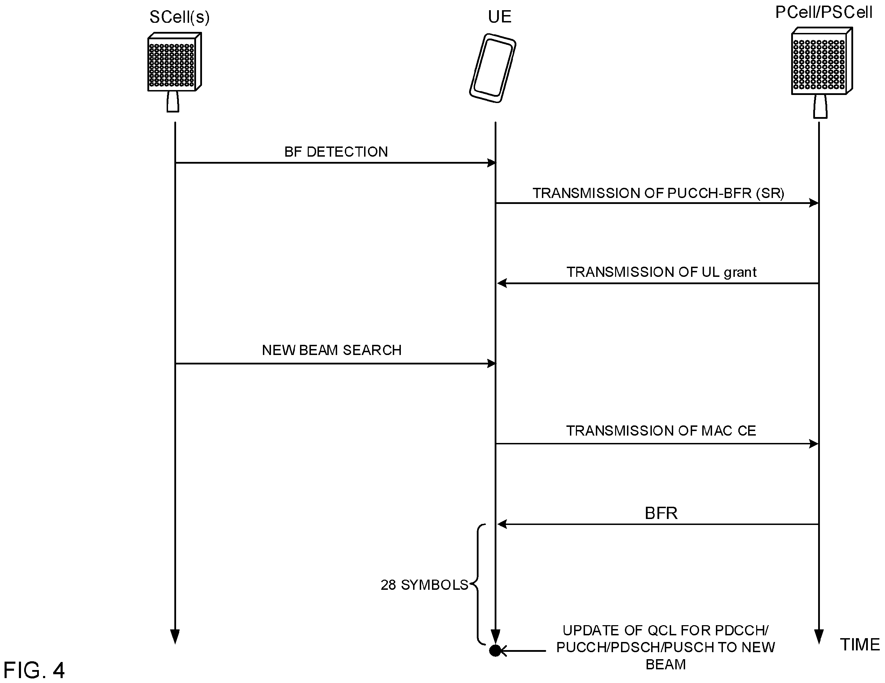

Hereinafter, a MAC CE operation based on a partial beam failure for a plurality of TRPs (for a UE having a plurality of panels) will be described with reference to Fig. 4. Fig. 4 is a diagram illustrating an example of a MAC CE operation based on the partial beam failure by the UE and the base station. The UE and the base station may sequentially perform the MAC CE operation based on the partial beam failure according to Step 1 and Step 2 as below.

### [Step 1]

When a BF is detected, a PUCCH-BFR (scheduling request (SR)) may be transmitted from the UE to the PCell/PSCell. The detected BF may be a BF for at least one TRP/panel. The PUCCH-BFR may be configured for each UE panel/RS set (group)/TRP, or may be configured for each UE. In addition, the PUCCH-BFR does not have to be configured for each UE panel/RS set (group)/TRP or does not have to be configured for each UE, similar to the operation studied in Rel. 16. Then, a UL grant (DCI) for the following Step 2 may be transmitted from the PCell/PSCell to the UE.

The configuration of the PUCCH-BFR may be omitted when the BFD is performed using a plurality of TRPs/panels.

### [Step 2]

After a UL grant is received, a new candidate beam search is performed. Then, in addition to information (for example, a component carrier (CC) index) regarding a CC on which the beam failure is detected (failed) and information (for example, a beam index) regarding a new beam, the UE may transmit information (for example, a panel index) regarding a failed UE panel to the base station (PCell/PSCell) on an uplink channel (for example, a PUSCH) using a MAC CE. Thereafter, the BFR procedure is performed, and then the QCL for a PDCCH/PUCCH/PDSCH/PUSCH may be updated to a new beam 28 symbols after the BFR.

In Case 1 of the second embodiment, the MAC CE does not have to include the information (for example, the panel index) regarding the failed UE panel.

Note that the PCell, the PSCell, and the SCell in the present embodiment may be replaced with each other.

In addition, in the present embodiment, the information (for example, the panel index) regarding the failed UE panel may be information (for example, a TRP index) regarding the failed TRP or information (for example, a candidate RS ID) regarding a new candidate beam associated with the UE panel/TRP.

### <<First BFR MAC CE Configuration>>

Hereinafter, a MAC CE (BFR MAC CE) configuration used for BFR for making notification of information (for example, a panel ID) regarding a failed UE panel will be described. When the MAC CE includes a panel ID, the panel ID may have a bit length of a specific bit number (for example, N bits).

A specific field of the (existing) BFR MAC CE before Rel. 16 may be updated to a field for indicating a panel ID. The UE may assume that a specific field of the MAC CE is updated when partial beam failure detection is configured.

The BFR MAC CE before Rel. 16 may include at least one of a bit field indicating a cell in which a BF is detected, a reserved bit field, a candidate RS ID or reserved bit field (which may be simply referred to as a candidate RS ID field), a BFD indication field for a SpCell, or a field indicating the presence of a candidate RS ID.

The reserved bit field does not have to be particularly used for notification of information, or may be freely used. The reserved bit field may be fixed to a predetermined value (for example, 0) in the specification.

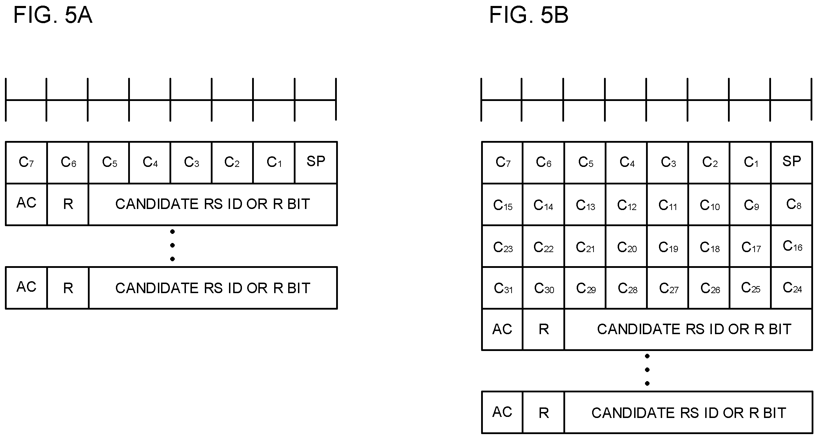

Figs. 5A and 5B are diagrams illustrating the BFR MAC CE configuration before Rel. 16. Fig. 5A illustrates a case where the MAC CE in a case where the field indicating a cell in which a BF is detected is included for seven or less cells is updated. Fig. 5B illustrates a case where the MAC CE in a case where the field indicating a cell in which a BF is detected is included for 32 or less cells is updated.

In Figs. 5A and 5B, a Cₙ bit (n is an integer of 1 or more) is a bit field indicating a cell in which a BF is detected, an SP bit is a BFD indication field for the SpCell, an AC bit is the field indicating the presence of a candidate RS ID, and an R bit is a reserved bit. Hereinafter, in the present disclosure, the Cₙ bit and the R bit in the diagram illustrating the MAC CE configuration are similar.

For example, at least a part of the field indicating a cell in which a BF is detected in an existing MAC CE may be updated to a field for indicating a panel ID (panel ID field). The field may indicate a field of a cell ID of a serving cell. Note that the field may indicate a field of a cell ID of a cell that is not the serving cell (which may be simply referred to as "Cell ID").

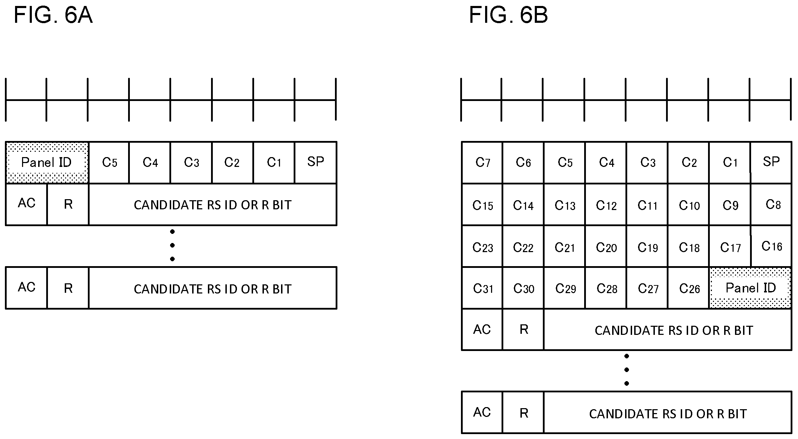

Figs. 6A and 6B are diagrams illustrating an example of a BFR MAC CE configuration including a panel ID. Fig. 6A illustrates a case where the MAC CE in a case where the field indicating a cell in which a BF is detected is included for seven or less cells is updated. Fig. 6B illustrates a case where the MAC CE in a case where the field indicating a cell in which a BF is detected is included for 32 or less cells is updated.

In Figs. 6A and 6B, a field indicating a cell in which a BF is detected in the MAC CE is updated to a field for indicating a panel ID having a bit length of 2 bits. The UE transmits the updated MAC CE to the NW, and the NW performs the beam failure recovery procedure based on the panel ID included in the MAC CE.

Furthermore, for example, the reserved bit field of the existing MAC CE may be updated to the field for indicating a panel ID.

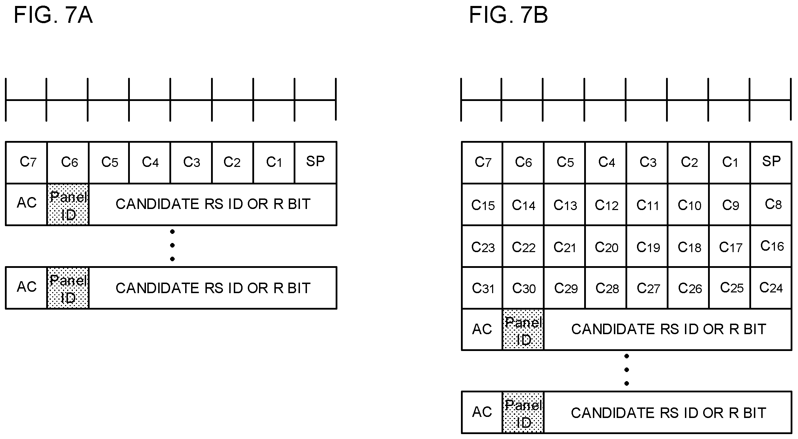

Figs. 7A and 7B are diagrams illustrating another example of the BFR MAC CE configuration including the panel ID. Fig. 7A illustrates a case where the MAC CE in a case where the field indicating a cell in which a BF is detected is included for seven or less cells is updated. Fig. 7B illustrates a case where the MAC CE in a case where the field indicating a cell in which a BF is detected is included for 32 or less cells is updated.

In the diagram illustrating the MAC CE configuration of the present disclosure, the size and arrangement of each field and the allocation of the index to each field are merely examples, and the present disclosure is not limited thereto.

In Figs. 7A and 7B, the reserved bit field is updated to a field for indicating a panel ID having a bit length of one bit. Since the reserved bit field is included in the MAC CE for each octet corresponding to each cell, the panel ID can be reported for each cell. The UE transmits the updated MAC CE to the NW, and the NW performs the beam failure recovery procedure based on the panel ID included in the MAC CE.

In Figs. 6A, 6B, 7A, and 7B, a value of a candidate RS ID corresponding to a panel ID may be a global index or a local index. In a case where the value of the candidate RS ID is a global index, for example, #0 to #31 may be allocated as candidate RS IDs corresponding to panel ID #0, and #32 to #63 may be allocated as candidate RS IDs corresponding to panel ID #1. In addition, in a case where the value of the candidate RS ID is a local index, for example, #0 to #31 may be allocated as candidate RS IDs corresponding to each of panel ID #0 and panel ID #1.

The panel ID may be implicitly indicated by a specific field of the (existing) MAC CE before Rel. 16. The UE may assume that the field of the existing MAC CE indicates the panel ID when partial beam failure detection is configured.

For example, the panel ID may be implicitly indicated by the candidate RS ID or reserved bit field of the existing MAC CE. In other words, the candidate RS ID or reserved bit field of the existing MAC CE may be a field associated with the panel ID.

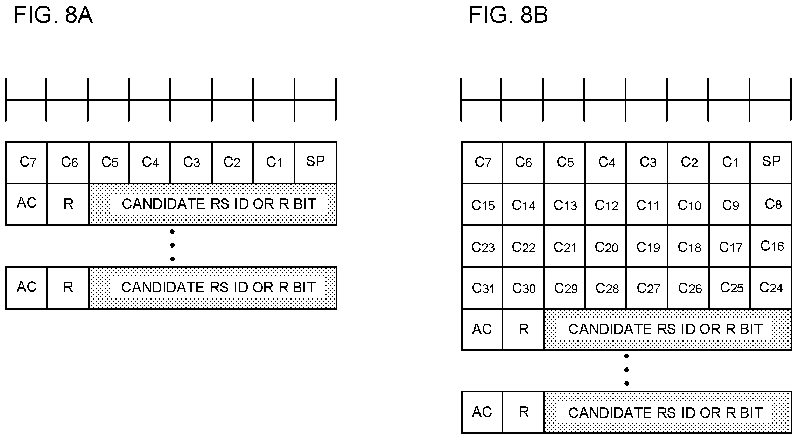

Figs. 8A and 8B are diagrams illustrating another example of the MAC CE configuration including the panel ID. Fig. 8A illustrates a case where the MAC CE in a case where the field indicating a cell in which a BF is detected is included for seven or less cells is updated. Fig. 8B illustrates a case where the MAC CE in a case where the field indicating a cell in which a BF is detected is included for 32 or less cells is updated.

In Figs. 8A and 8B, the value of the candidate RS ID corresponding to the panel ID may be a global index. For example, #0 to #31 are allocated as candidate RS IDs corresponding to panel ID #0, and #32 to #63 are allocated as candidate RS IDs corresponding to panel ID #1.

In Figs. 8A and 8B, the candidate RS ID field implicitly indicates the panel ID. For example, in a case where the value of the candidate RS ID is a value (for example, #0 to #31) corresponding to panel ID #0, the field indicates panel ID #0. Further, for example, in a case where the value of the candidate RS ID is a value (for example, #32 to #63) corresponding to panel ID #1, the field indicates panel ID #1. The UE uses the candidate RS ID field to implicitly notify the NW of the panel ID, and the NW performs the beam failure recovery procedure based on the candidate RS ID field.

The candidate RS IDs corresponding to each panel ID may partially overlap in a plurality of panels. In a case where the candidate RS IDs corresponding to each panel ID partially overlap in a plurality of panels, information regarding the overlapping candidate RS IDs may be reported to the UE by higher layer signaling/physical layer signaling.

### <<Second BFR MAC CE Configuration>>

A method of making notification that a BF has occurred for all of a plurality of TRPs/UE panels or that a BF has occurred for some of a plurality of TRPs/UE panels by using the (existing) MAC CE before Rel. 16 will be described below.

In a case where a higher layer parameter (RRC parameter) for partial beam failure detection of a plurality of panels (a plurality of TRPs) are configured for the UE, the UE may assume that a specific field of the existing MAC CE is changed to a field (which may be referred to as a partial BFD indication field) indicating that a BF has occurred for all of the plurality of TRPs/UE panels or that a BF has occurred for some of the plurality of TRPs/UE panels. The specific field may be the reserved bit field.

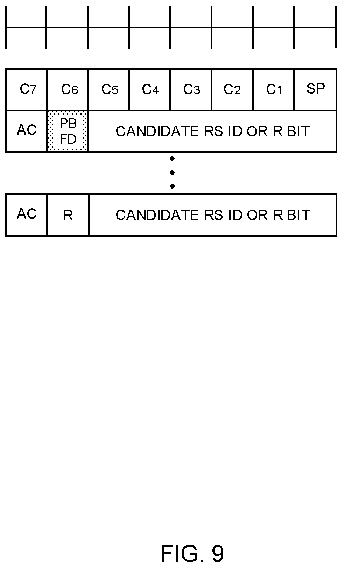

Fig. 9 is a diagram illustrating an example of a second BFR MAC CE configuration. Fig. 9 illustrates a configuration of the MAC CE in a case where the field indicating a cell in which a BF is detected is included for seven or less cells. In Fig. 9, a PBFD bit represents the partial BFD indication field.

In Fig. 9, a certain reserved bit field is updated to the partial BFD indication field. The NW may be aware of the partial beam failure based on the partial BFD indication field.

In a case where the specific field indicates that a BF has occurred for all of the plurality of TRPs/UE panels, the UE and the NW may perform the same BFR operation as in Rel. 16. In a case where the specific field indicates that a BF has occurred for some of the plurality of TRPs/UE panels, the UE and the NW may perform the BFR operation assuming that the MAC CE is updated as described above. In this case, the candidate RS ID included in the MAC CE may indicate information regarding a new beam for the failed panel.

Furthermore, in a case where the specific field indicates that a BF has occurred for all of the plurality of TRPs/UE panels, information regarding a new beam for a random panel/TRP may be indicated by the candidate RS ID included in the MAC CE.

Furthermore, in a case where the specific field indicates that a BF has occurred for all of the plurality of TRPs/UE panels, information regarding a new beam for a specific panel/TRP may be indicated by the candidate RS ID included in the MAC CE. The specific panel/TRP may be a panel/TRP corresponding to the smallest panel ID/TRP ID.

Furthermore, in a case where the specific field indicates that a BF has occurred for all of the plurality of TRPs/UE panels, the MAC CE may be extended as in Configurations 1 to 3 described below. Configuration 2-1 to Configuration 2-3 are described below with a MAC CE of eight octets (corresponding to seven or less cells) as an example, but the number of octets (the number of cells) is not limited thereto.

### [Configuration 2-1]

Configuration 2-1 may include the BFR MAC CE including fields corresponding to each of a plurality of TRPs/panels. The fields corresponding to each of the plurality of TRPs/panels may include the field indicating a cell in which a BF is detected in the MAC CE, the reserved bit field, and the candidate RS ID field.

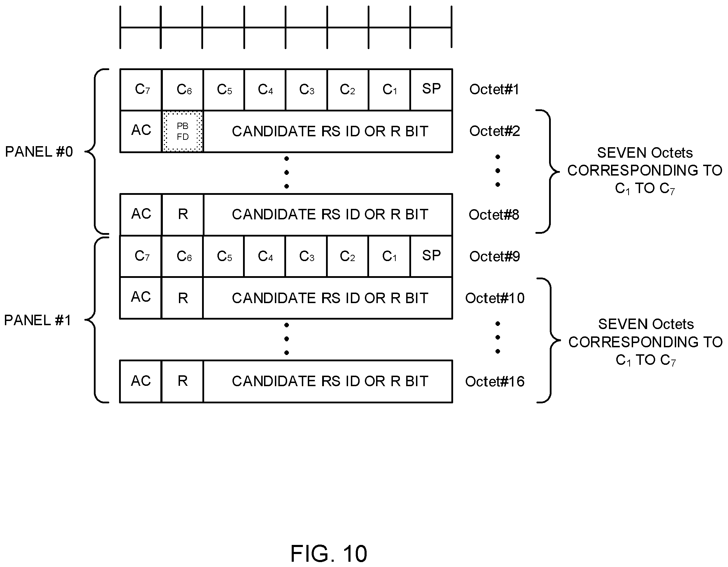

Fig. 10 is a diagram illustrating an example of Configuration 2-1 of an extended BFR MAC CE. In Fig. 10, the extended MAC CE includes fields corresponding to a plurality of (here, two) panels, that is, fields corresponding to panel #0 and fields corresponding to panel #1. The fields corresponding to each panel include the field indicating a cell in which a BF is detected in the MAC CE, the reserved bit field, the candidate RS ID field, and the partial BFD indication field.

The configuration of the BFR MAC CE illustrated in Fig. 10 may be a configuration in which the field indicating a cell in which a BF is detected is configured for each of the plurality of panels/TRPs.

In the example illustrated in Fig. 10, octets #2 to #8 may be seven octets corresponding to C₁ to C₇ for panel #0. In addition, octets #10 to #16 may be seven octets corresponding to C₁ to C₇ for panel #1.

### [Configuration 2-2]

Configuration 2-2 may include the BFR MAC CE including fields corresponding to each of a plurality of TRPs/panels. Fields corresponding to a specific TRP/panel may include the field indicating a cell in which a BF is detected in the MAC CE, the reserved bit field, and the candidate RS ID field. Fields corresponding to a TRP/panel other than the specific TRP/panel may include the reserved bit field and the candidate RS ID field. The specific TRP/panel may be, for example, a TRP/panel corresponding to the smallest TRP ID/panel ID.

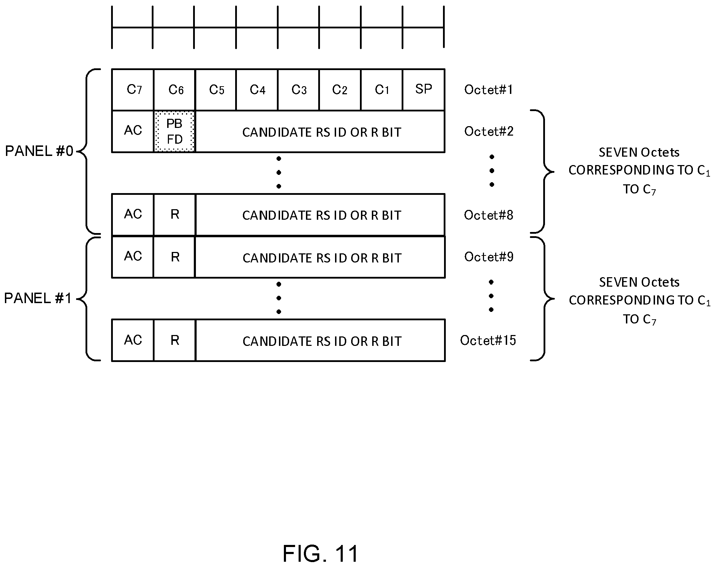

Fig. 11 is a diagram illustrating an example of Configuration 2-2 of the extended BFR MAC CE. In Fig. 11, the extended MAC CE includes fields corresponding to a plurality of (here, two) panels, that is, fields corresponding to panel #0 and fields corresponding to panel #1. The fields corresponding to panel #0 include the field indicating a cell in which a BF is detected in the MAC CE, the reserved bit field, and the candidate RS ID field. The fields corresponding to panel #1 include the reserved bit field, the candidate RS ID field, and the partial BFD indication field.

The configuration of the BFR MAC CE illustrated in Fig. 11 may be a configuration in which the field indicating a cell in which a BF is detected is configured in common for the plurality of panels/TRPs.

In the example illustrated in Fig. 11, octets #2 to #8 may be seven octets corresponding to C₁ to C₇ for panel #0. In addition, octets #9 to #15 may be seven octets corresponding to C₁ to C₇ for panel #1. That is, in this case, octet #n and octet #n+k (n and k are arbitrary integers (here, k = 7)) may correspond to the same cell.

### [Configuration 2-3]

Configuration 2-3 may include the MAC CE including fields corresponding to each of a plurality of TRPs/panels. A value of a specific field (for example, the reserved bit field) may indicate to which of the plurality of TRPs/panels a field corresponds.

For example, it may be indicated that, in a case where a value of a specific field (for example, the reserved bit field) is a first value (for example, 0), the candidate RS ID field adjacent to the specific field corresponds to a certain TRP/panel. On the other hand, it may be indicated that, in a case where the value of the specific field is a second value (for example, 1), the candidate RS ID field adjacent to the specific field corresponds to another TRP/panel.

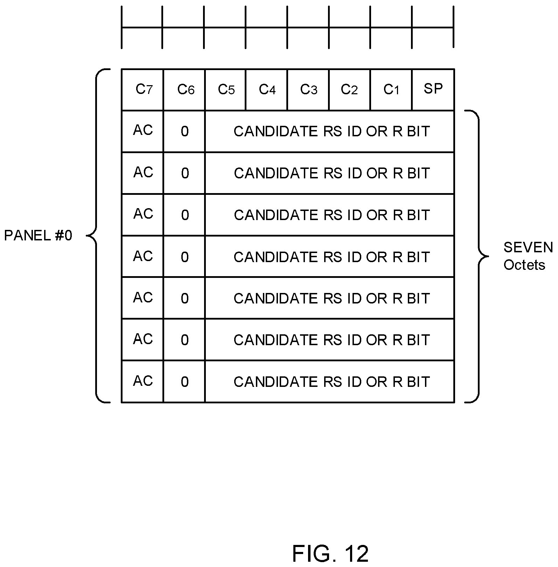

Fig. 12 is a diagram illustrating an example of Configuration 2-3 of the BFR MAC CE. In the example of Fig. 12, the values of the reserved bit fields included in the MAC CE are all 0. In this case, it is indicated that all candidate RS ID fields correspond to panel #0.

In the example illustrated in Fig. 12, octets #2 to #8 may be seven octets corresponding to C₄ to C₇ for panel #0.

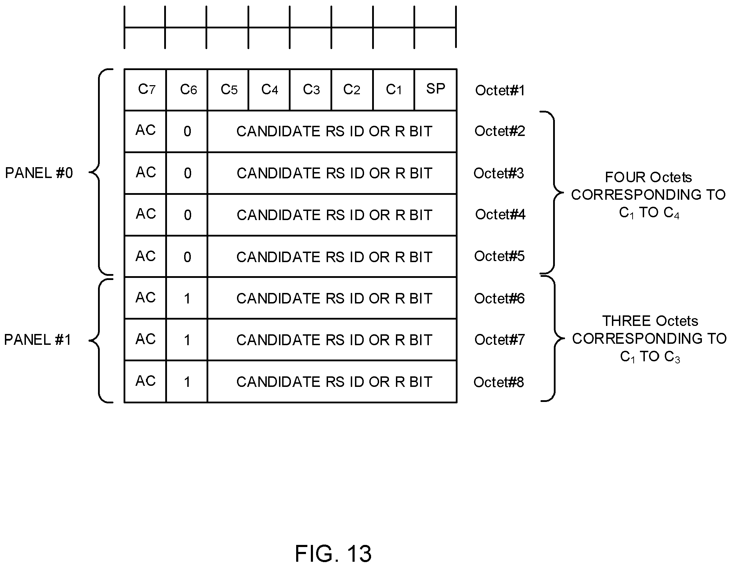

Fig. 13 is a diagram illustrating another example of Configuration 2-3 of the BFR MAC CE. In the example of Fig. 13, the values of the reserved bit fields of octets #2 to #5 are 0, and the values of the reserved bit fields of octets #6 to #8 are 1. In this case, it is indicated that the candidate RS ID fields of octets #2 to #5 correspond to panel #0, and the candidate RS ID fields of octets #6 to #8 correspond to panel #1.

In the example illustrated in Fig. 13, octets #2 to #5 may be four octets corresponding to C₁ to C₄ for panel #0. In addition, octets #6 to #8 may be three octets corresponding to C₁ to C₃ for panel #1.

It may be indicated that in a case where the value of the specific field indicates the second value, the candidate RS ID field adjacent to the specific field may correspond to a certain TRP/panel until an equal or less value of the specific field is switched from the first value to the second value. It may be indicated that in a case where the value of the specific field is switched from the second value to the first value, the candidate RS ID field adjacent to the specific field may correspond to another TRP/panel until an equal or less value of the specific field is switched from the first value to the second value.

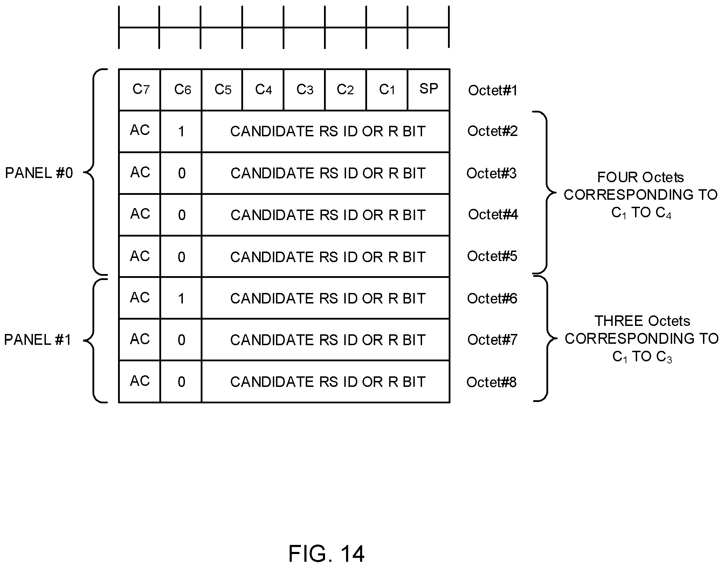

Fig. 14 is a diagram illustrating another example of Configuration 2-3 of the extended BFR MAC CE. In the example of Fig. 14, the value of the reserved bit field of octet #2 is 1, and the values of the reserved bit fields of octets #3 to #5 are 0. Further, the value of the reserved bit field of octet #6 is 1, and the values of the reserved bit fields of octet #7 and octet #8 are 0. In this case, it is indicated that the candidate RS ID fields of octets #2 to #5 correspond to panel #0, and the candidate RS ID fields of octets #6 to #8 correspond to panel #1.

In the example illustrated in Fig. 14, octets #2 to #5 may be four octets corresponding to C₁ to C₄ for panel #0. In addition, octets #6 to #8 may be three octets corresponding to C₁ to C₃ for panel #1.

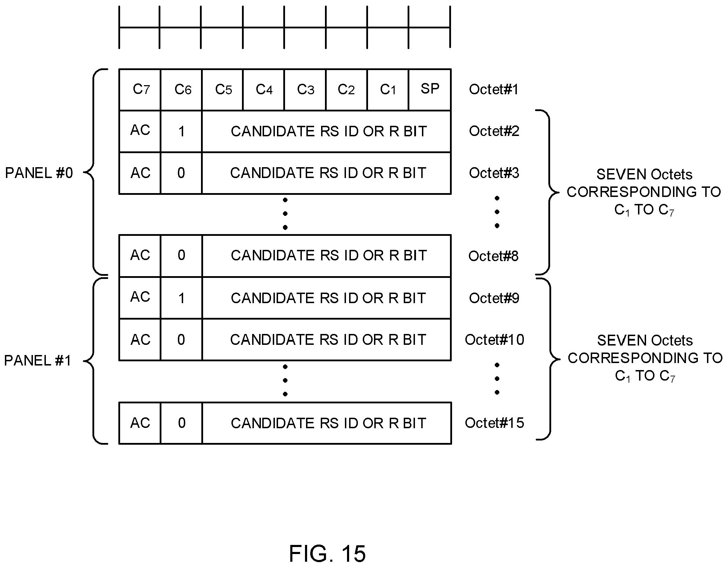

Fig. 15 is a diagram illustrating another example of Configuration 2-3 of the extended BFR MAC CE. In the example of the MAC CE in the example of Fig. 15, the value of the reserved bit field of octet #2 is 1, and the values of the reserved bit fields of octets #3 to #8 are 0. Further, the value of the reserved bit field of octet #9 is 1, and the values of the reserved bit fields of octets #10 to #15 are 0. In this case, it is indicated that the candidate RS ID fields of octets #2 to #8 correspond to panel #0, and the candidate RS ID fields of octets #9 to #15 correspond to panel #1.

In the example illustrated in Fig. 15, octets #2 to #8 may be seven octets corresponding to C₁ to C₇ for panel #0. In addition, octets #9 to #15 may be seven octets corresponding to C₁ to C₇ for panel #1.

### <<Variations of MAC CE Configuration>>

As described above, whether or not the MAC CE is extended (whether or not to add an octet) may be indicated by a specific field included in the MAC CE. Specifically, the specific field may indicate whether or not to add an octet including a candidate RS ID for a plurality of TRPs/panels.

The specific field may be the reserved bit field. Furthermore, at this time, a candidate RS configuration may be associated with a plurality of TRPs/panels.

In a case where the specific field included in the MAC CE is the first value (for example, 0), the MAC CE may indicate that a bit field related to one panel is included, and information regarding a candidate RS for a failed panel.

Furthermore, in a case where the specific field included in the MAC CE is the second value (for example, 1), the MAC CE may indicate that bit fields related to a plurality of (for example, two) panels are included (an octet is added), and indicate information regarding a failed panel and a candidate RS for another panel.

As described above, according to the third embodiment, it is possible to more appropriately control the partial beam failure detection using the MAC CE.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

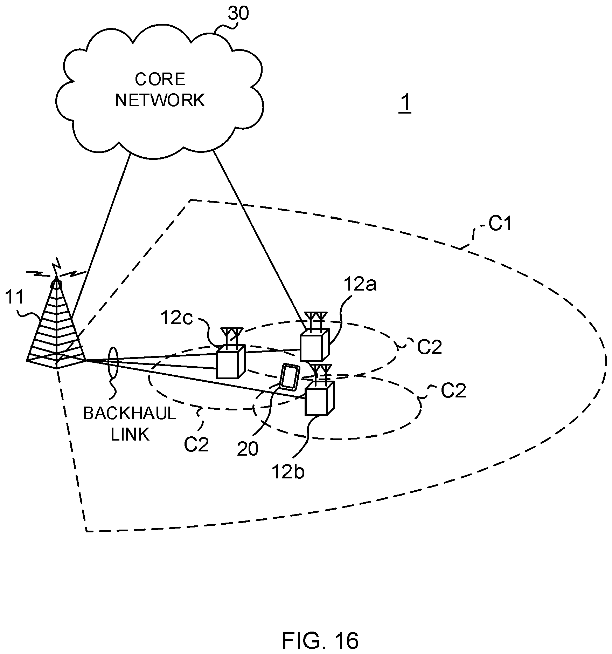

Fig. 16 is a diagram illustrating an example of a schematic configuration of the radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication in each CC using at least one of time division duplex (TDD) or frequency division duplex (FDD).

The plurality of base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Further, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the

### PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that the DMRS may be referred to as a user terminal-specific reference signal (UE-specific reference signal).

### (Base Station)

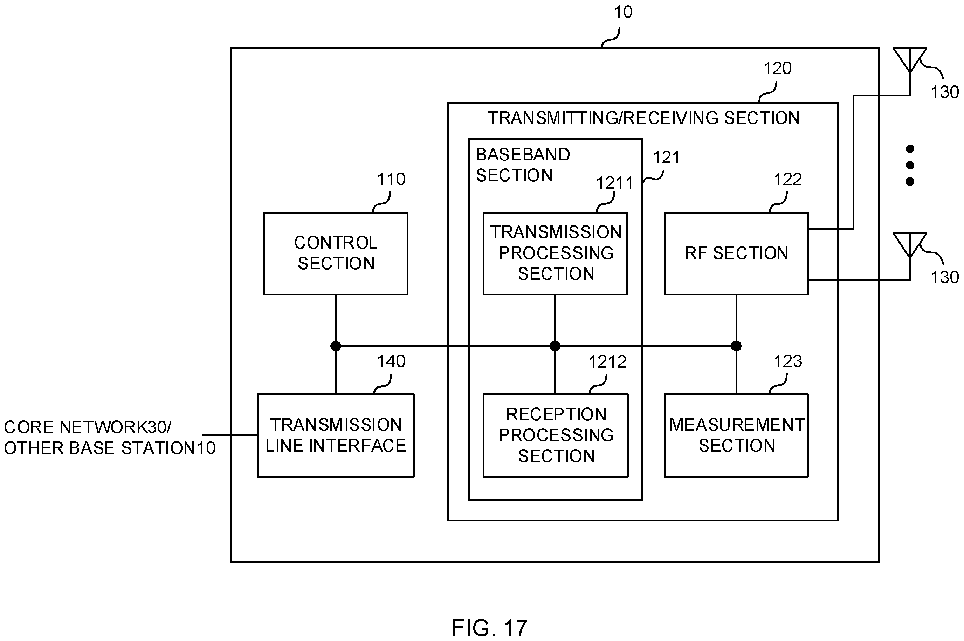

Fig. 17 is a diagram illustrating an example of a configuration of the base station according to one embodiment. The base station 10 includes a control section 110, a transmitting/receiving section 120, a transmission/reception antenna 130, and a transmission line interface 140. Note that one or more control sections 110, one or more transmitting/receiving sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitting section/receiving section, an RF circuit, a baseband circuit, a filter, a phase shifter, a measurement circuit, a transmission/reception circuit, and the like that are described based on common recognition in the technical field related to the present disclosure.

The transmitting/receiving section 120 may be configured as an integrated transmitting/receiving section, or may be configured by a transmitting section and a receiving section. The transmitting section may include the transmission processing section 1211 and the RF section 122. The receiving section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam or a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmitting section and the receiving section of the base station 10 in the present disclosure may include at least one of the transmitting/receiving section 120, the transmission/reception antenna 130, or the transmission line interface 140.

The transmitting/receiving section 120 may transmit one or more beam failure detection reference signals (BFD-RSs) corresponding to each of a plurality of panels. In a case where the radio link quality of at least some of configured BFD-RSs in the terminal is lower than a specific threshold, the control section 110 may control reception of information regarding a new BFD-RS determined from a candidate BFD-RS set (first embodiment).

### (User Terminal)

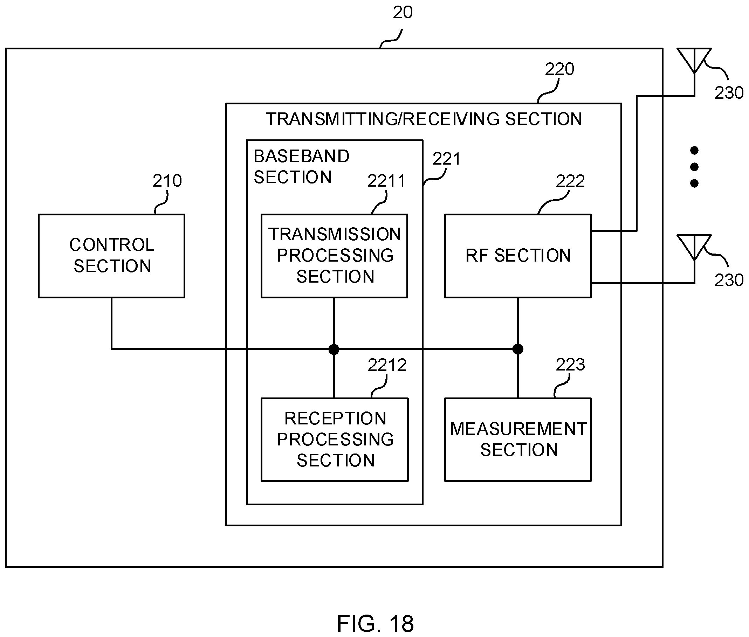

Fig. 18 is a diagram illustrating an example of a configuration of the user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described based on common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data, control information, a sequence, and the like to be transmitted as signals, and may forward the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be implemented by a transmitter/receiver, an RF circuit, a baseband circuit, a filter, a phase shifter, a measurement circuit, a transmitting/receiving circuit, and the like that are described based on common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmission/reception antenna 230 can include an antenna described based on common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam or a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive one or more beam failure detection reference signals (BFD-RSs) corresponding to each of a plurality of panels. In a case where the radio link quality of at least some of configured BFD-RSs is lower than a specific threshold, the control section 210 may determine a new BFD-RS from a candidate BFD-RS set (first embodiment).

The candidate BFD-RS set may be a set common to the plurality of panels or a set independently configured for each of the plurality of panels (first embodiment).

The control section 210 may perform control to transmit at least one of panel IDs corresponding to the at least some BFD-RSs or information regarding candidate beams corresponding to the at least some BFD-RSs (second embodiment).

The control section 210 may perform control to transmit a media access control control element (MAC CE) including at least one of a panel ID field or a field associated with the panel ID (third embodiment).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be implemented by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

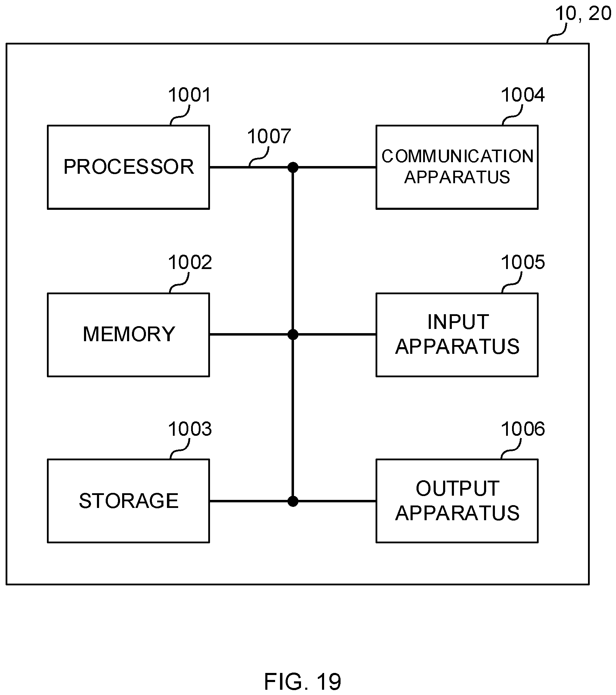

For example, the base station, the user terminal, and the like according to one embodiment of the present disclosure may function as a computer that executes the processing of the radio communication method of the present disclosure. Fig. 19 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. The processor 1001 may be implemented by one or more chips.

Each function of the base station 10 and the user terminal 20 is implemented by predetermined software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 controls the entire computer by, for example, operating an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads programs (program codes), software modules, data, and the like from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, and the like that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as a "secondary storage apparatus".

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmission/reception antenna 130 (230), and the like described above may be implemented by the communication apparatus 1004. The transmitting/receiving section 120 (220) may be implemented by being physically or logically separated into the transmitting section 120a (220a) and the receiving section 120b (220b).

The input apparatus 1005 is an input device for receiving input from the outside (for example, a keyboard, a mouse, a microphone, a switch, a button, a sensor, and the like). The output apparatus 1006 is an output device that performs output to the outside (for example, a display, a speaker, a light emitting diode (LED) lamp, or the like). Note that the input apparatus 1005 and the output apparatus 1006 may be integrated with each other (for example, a touch panel).

The apparatuses such as the processor 1001 and the memory 1002 are connected by a bus 1007 for communicating information. The bus 1007 may be implemented using a single bus, or may be implemented using different buses for different connections between the apparatuses.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented using at least one of these pieces of hardware.

### (Modifications)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may include one or more periods (frames) in the time domain. Each of the one or more periods (frames) included in the radio frame may be referred to as a subframe. Further, the subframe may include one or more slots in the time domain. The subframe may be a fixed duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, the slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

The radio frame, the subframe, the slot, the mini slot, and the symbol each represent a time unit in signal communication. The radio frame, the subframe, the slot, the mini slot, and the symbol may be called by other applicable names, respectively. Note that time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that a unit representing the TTI may be referred to as a slot, a mini slot, or the like instead of a subframe.

Here, the TTI refers to, for example, a minimum time unit of scheduling in radio communication. For example, in the LTE system, a base station performs scheduling to allocate radio resources (a frequency bandwidth, transmission power, and the like that can be used in each user terminal) to each user terminal in TTI units. Note that the definition of the TTI is not limited thereto.

The TTI may be a transmission time unit of a channel-coded data packet (transport block), a code block, a codeword, and the like or may be a processing unit of scheduling, link adaptation, and the like When the TTI is given, a time interval (for example, the number of symbols) to which a transport block, a code block, a codeword, or the like is actually mapped may be shorter than the TTI.

When one slot or one mini slot is referred to as the TTI, one or more TTIs (that is, one or more slots or one or more mini slots) may be a minimum time unit of scheduling. The number of slots (the number of mini slots) constituting the minimum time unit of scheduling may be controlled.

A TTI having a duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

A long TTI (such as a normal TTI or a subframe) may be replaced with a TTI having a duration exceeding 1 ms. A short TTI (such as a shortened TTI) may be replaced with a TTI having a TTI length less than the TTI length of a long TTI and more than or equal to 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on a numerology.

The RB may include one or more symbols in the time domain, and may have a length of one slot, one mini slot, one subframe, or one TTI. One TTI, one subframe, and the like may each be comprised of one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource domain of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a predetermined signal/channel outside the active BWP. Note that "cell", "carrier", and the like in the present disclosure may be replaced with "BWP".

Note that the structures of radio frames, subframes, slots, mini slots, symbols, and the like described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, and the like described in the present disclosure may be represented using absolute values, or may be represented using relative values with respect to predetermined values, or may be represented using other corresponding information. For example, a radio resource may be instructed by a predetermined index.

The names used for parameters and the like in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, and the like described in the present disclosure may be represented using any of a variety of different technologies. For example, data, an instruction, a command, information, a signal, a bit, a symbol, a chip, and the like, which may be referred to throughout the above description, may be represented by a voltage, a current, an electromagnetic wave, a magnetic field or a magnetic particle, an optical field or an optical photon, or any combination of these.

Information, signals, and the like can be output in at least one of a direction from a higher layer to a lower layer or a direction from a lower layer to a higher layer. Information, signals, and the like may be input and output via a plurality of network nodes.

Input and output information, signals, and the like may be stored in a specific location (for example, memory), or may be managed using a control table. The information, signals, and the like to be input and output can be overwritten, updated, or appended. The output information, signals, and the like may be deleted. The input information, signals, and the like may be transmitted to another apparatus.

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and the like).

Determination may be performed using a value represented by one bit (0 or 1), or may be performed using a Boolean represented by true or false, or may be performed by comparing numerical values (for example, comparison with a predetermined value).

Software, regardless of whether it is referred to as software, firmware, middleware, microcode, or a hardware description language, or referred to by another name, should be interpreted broadly to mean a command, a command set, a code, a code segment, a program code, a program, a subprogram, a software module, an application, a software application, a software package, a routine, a subroutine, an object, an executable file, an execution thread, a procedure, a function, and the like

Moreover, software, commands, information, and the like may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "reference signal (RS port group)", "layer", "number of layers", "rank", "resource", "resource set", "resource group", "beam", "beam width", "beam angle", "antenna", "antenna element", "panel", and "transmission/reception point" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a radio communication apparatus, and the like. Note that at least one of the base station or the mobile station may be a device mounted on a moving body, a moving body itself, and the like. The moving body may be a transportation (for example, a car, an airplane, or the like), an unmanned moving body (for example, a drone, an autonomous car, or the like), or a (manned or unmanned) robot. Note that at least one of the base station and the mobile station also includes a device that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded based on these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on".

All references to the elements using designations such as "first" and "second" as used in the present disclosure do not generally limit the amount or sequence of these elements. These designations can be used in the present disclosure, as a convenient way of distinguishing between two or more elements. Thus, references to first and second elements do not mean that only the two elements can be employed, or that the first element must precede the second element in some form.

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, "determining" may be regarded as "determining" receiving (for example, receiving information), transmitting (for example, transmitting information), inputting, outputting, accessing (for example, accessing data in memory), and the like.

Moreover, "determining" may be interpreted as "determining" resolving, selecting, choosing, establishing, comparing, and the like. In other words, "determining" used herein may be interpreted to mean making "determination" related to some action.

In addition, "determining" may be replaced with "assuming", "expecting", "considering", or the like.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined based on the description of claims. Thus, the description of the present disclosure is for the purpose of explaining examples and does not bring any limiting meaning to the invention according to the present disclosure.

## Claims

1. A terminal comprising:
a receiving section that receives one or more beam failure detection reference signals (BFD-RSs) corresponding to each of a plurality of panels; and
a control section that determines a new BFD-RS from a candidate BFD-RS set in a case where radio link quality of at least some of configured BFD-RSs is lower than a specific threshold.

2. The terminal according to claim 1, wherein the candidate BFD-RS set is a set common to the plurality of panels or a set independently configured for each of the plurality of panels.

3. The terminal according to claim 1, wherein the control section performs control to transmit at least one of panel IDs corresponding to the at least some BFD-RSs or information regarding candidate beams corresponding to the at least some BFD-RSs.

4. The terminal according to claim 1, wherein the control section performs control to transmit a media access control control element (MAC CE) including at least one of a panel ID field or a field associated with a panel ID.

5. A radio communication method of a terminal, the radio communication method comprising:
receiving one or more beam failure detection reference signals (BFD-RSs) corresponding to each of a plurality of panels; and
determining a new BFD-RS from a candidate BFD-RS set in a case where radio link quality of at least some of configured BFD-RSs is lower than a specific threshold.

6. A base station comprising:
a transmitting section that transmits one or more beam failure detection reference signals (BFD-RSs) corresponding to each of a plurality of panels; and
a control section that controls reception of information regarding a new BFD-RS determined from a candidate BFD-RS set in a case where radio link quality of at least some of configured BFD-RSs in a terminal is lower than a specific threshold.
